Europäisches Patentamt

European Patent Office

Office européen des brevets

(19)

(11) Veröffentlichungsnummer : **0 386 033 B1**

# EUROPÄISCHE PATENTSCHRIFT

(12)

(45) Veröffentlichungstag der Patentschrift :
26.08.92 Patentblatt 92/35

(51) Int. Cl.$^5$ : **G01N 30/20**

(21) Anmeldenummer : **88908941.3**

(22) Anmeldetag : **17.10.88**

(86) Internationale Anmeldenummer :
**PCT/DE88/00640**

(87) Internationale Veröffentlichungsnummer :
**WO 89/03990 05.05.89 Gazette 89/10**

(54) **EINRICHTUNG UND VERFAHREN ZUR PROBENDOSIERUNG IN DER GASCHROMATOGRAPHIE.**

(30) Priorität : **22.10.87 DE 3735814**

(43) Veröffentlichungstag der Anmeldung :
**12.09.90 Patentblatt 90/37**

(45) Bekanntmachung des Hinweises auf die
Patenterteilung :
**26.08.92 Patentblatt 92/35**

(84) Benannte Vertragsstaaten :
**DE FR IT NL**

(56) Entgegenhaltungen :
**EP-A- 0 112 407**
**EP-A-00 494 40**

(56) Entgegenhaltungen :
**DE-A- 1 909 703**
**DE-A- 1 917 723**
**DE-A- 2 040 133**
**US-A- 3 077 766**
**US-A- 4 442 217**

(73) Patentinhaber : **SIEMENS**
**AKTIENGESELLSCHAFT**
**Wittelsbacherplatz 2**
**W-8000 München 2 (DE)**

(72) Erfinder : **MÜLLER, Friedhelm**
**Bahnhofstr. 90**
**W-7515 Linkenheim (DE)**
Erfinder : **CLAUSS, Fernand**
**3, rue du Cimetière**
**F-67930 Beinheim (FR)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 386 033 B1

**Beschreibung**

Die Erfindung bezieht sich auf Einrichtungen und Verfahren zur Probendosierung in der Gaschromatographie.

Stand der Technik

Die Leistungsfähigkeit der gaschromatographischen Analyse hängt in großem Maße von der Probenaufgabe (Dosierung) in die Trennsäule ab. Es werden möglichst scharf abgegrenzte "Pfropfen" von Probengas in dem Trägergasstrom gefordert, welcher mit einer für die jeweilige Trennsäule optimalen Strömungsgeschwindigkeit fließt. Da in der Praxis der Druck in der Probengasquelle häufig auf niedrigerem Druckniveau liegt als der notwendige Betriebsdruck für das Trägergas, treten bei der Dosierung der Probe Druckstöße auf, die das Analysenergebnis verschlechtern. Es müssen daher Pumpen vorgesehen werden, um den Druck in der Probenzuleitung zu der Dosiereinrichtung auf die erforderliche Höhe zu bringen.

Bei der Verwendung von Kapillar-Trennsäulen ist ein Strömungsteiler vorzusehen, um die sehr kleine Probenmenge dosieren zu können. Eine solche Anordnung ist beispielsweise in der US-PS 4 442 217 beschrieben. Mit dem Ziel, korrosionsanfällige mechanische Bauteile, z. B. Ventile, im Weg des Probenstroms zu vermeiden, wird bei dieser bekannten Anordnung die Dosierung in die Trennsäule durch Umschaltung des Trägergasstroms an einer Verzweigung vorgenommen, von der einerseits eine Dosierleitung, andererseits eine Auslaßleitung abgehen. Mit Hilfe von Strömungswiderständen werden die Durchflußverhältnisse so eingestellt, daß der Durchfluß in der Probenzuleitung größer ist als der Durchfluß in der Dosierleitung, aber kleiner als der in der Auslaßleitung. Damit wird erreicht, daß in der einen Schaltstellung des Umschalters das Trägergas über die Dosierleitung durch die Trennsäule strömt und die Probe über die Auslaßleitung abfließt, während in der anderen Schaltstellung über einen Strömungsteiler ein kleiner Teil der Probe, in die Trennsäule gefördert und die übrige Probenmenge abgeleitet wird. Der Strömungsteiler besteht aus einem von einer zylindrischen Kammer umgebenen und mittig mit einer Öffnung versehenen Rohr, dessen Eingang mit der Trägergasquelle verbindbar und dessen Ausgang an die zur Trennsäule führende Dosierleitung angeschlossen ist. Die zylindrische Kammer ist an ihrem oberen Ende mit einem Anschluß für die Probenzuleitung, an ihrem unteren Ende mit einem Anschluß für Trägergas und mit einem Anschluß für die Auslaßleitung versehen. Die Verzweigung wird durch die Öffnung in dem Rohr innerhalb der Kammer gebildet. Auch bei dieser bekannten Anordnung muß, funktionell bedingt, der Druck in der Probenzuleitung gleich oder höher sein als der Trägergasdruck.

Es besteht somit die Aufgabe, eine Einrichtung zur Probendosierung zu schaffen, bei der die Probenaufgabe unabhängig vom Druck in der Probengasquelle bewirkt werden kann.

Darstellung der Erfindung

Die Aufgabe läßt sich mit einer Einrichtung mit den Merkmalen des Anspruchs 1 bzw. 3 lösen.
Entsprechende Verfahren werden in den Ansprüchen 2 und 5 offenbart.
Durch die Verwendung eines an sich bekannten Dosierventils mit Dosiervolumen (siehe z. B. US-PS 3 077 7669 tig.4 bis 7, kann die Probe in einfacher Weise völlig unabhängig vom Druck in der Probengasquelle dem Strömungsteiler der Dosiereinrichtung zugeführt werden.

Ein weiterer wesentlicher Vorteil ist noch darin zu sehen, daß die Zeitdauer der Probendosierung in die Trennsäule kürzer gewählt werden kann als die Zeitdauer der Probenaufgabe aus dem Dosiervolumen des Dosierventils.

Dadurch werden die bisher durch Adsorption bzw. Desorption bei Verwendung des bekannten Dosierventils mit Dosiervolumen auftretenden Fehler weitgehend vermieden.

Das zu dosierende Probenvolumen kann problemlos eingestellt und somit an die Kapazität der Trennsäule angepaßt werden, was insbesondere bei der Verwendung von Kapillarsäulen von wesentlicher Bedeutung ist.

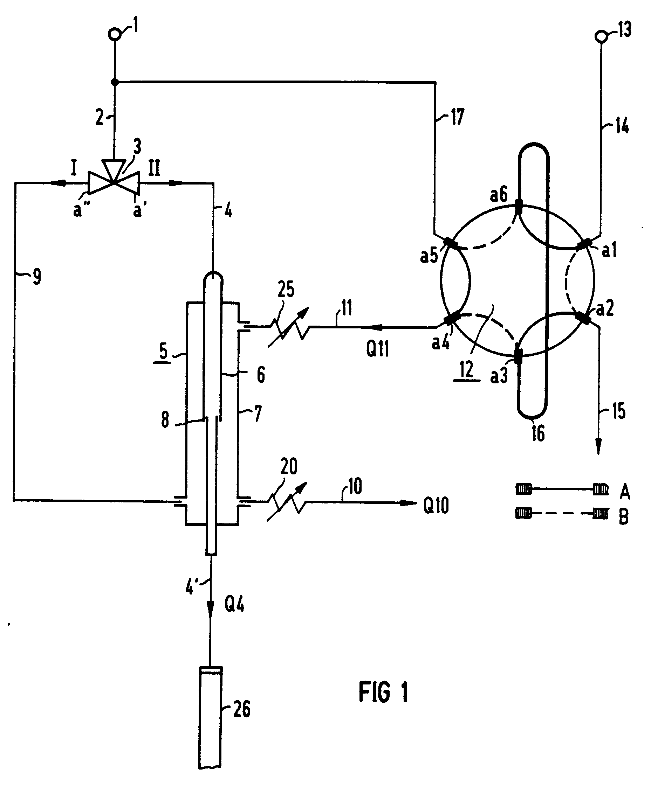

Zur Erläuterung der Erfindung ist in der Figur 1 eine erfindungsgemäße Einrichtung schematisch dargestellt.

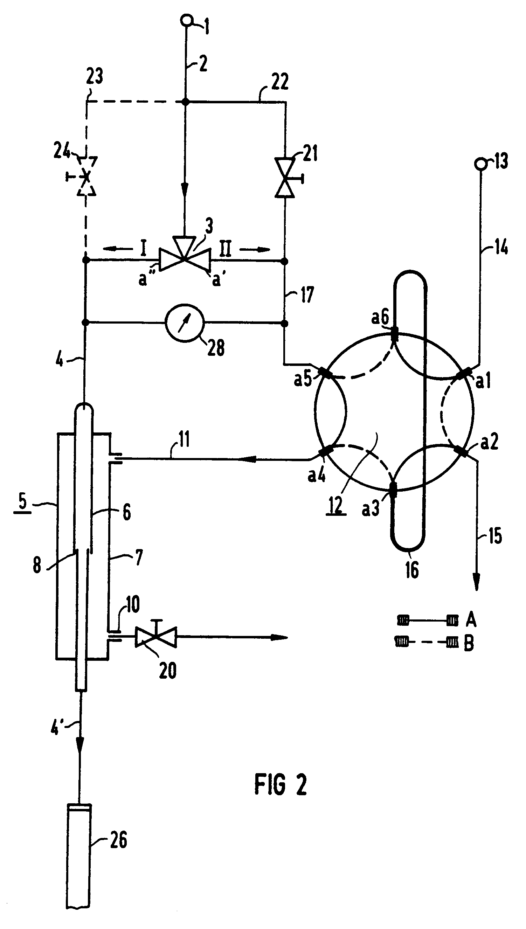

Figur 2 zeigt eine andere, verbesserte Ausführungsform der Erfindung.

Wege zur Ausführung der Erfindung

Eine Trägergasquelle 1 einstellbaren konstanten Drucks ist über eine Leitung 2 und den Eingang eines Zweiwege-Umschaltventils 3 angeschlossen.

Von dem ersten Ausgang a′ des Umschaltventils 3 führt ein erster Leitungszweig 4 zu einem Strömungsteiler 5 und dort über einen weiteren Leitungszweig 4′ zur Trennsäule 26.

Der Strömungsteiler 5 besteht aus einer zwischen die Leitungszweige 4 und 4′ geschalteten Rohrleitung 6, die von einer Kammer 7 umgeben und mittig mit einer vorzugsweise ringspaltförmigen Öffnung 8 versehen ist.

Der zweite Ausgang a″ des Umschaltventils 3 ist an einen Leitungszweig 9 angeschlossen, der in den stromabwärts gelegenen Endabschnitt der Kammer 7 mündet. Eine mit einem einstellbaren Strömungswiderstand, beispielsweise einem Nadelventil 20, versehene Ableitung 10 geht ebenfalls von dem stromabwärts gelegenen Teil der Kammer 7 aus.

An dem oberen, d. h. stromaufwärts, gelegenen Endabschnitt der Kammer 7 mündet die ebenfalls mit einem einstellbaren Strömungswiderstand 25 versehene Probenzuleitung 11. Die Strömungswiderstände in den Leitungen 4′, 10 und 11 sind so zu bemessen, daß

$$Q10 > Q11 > Q4 \quad (1)$$

ist, wobei
Q11 der volumetrische Durchfluß in der Probenzuleitung 11,
Q10 der Durchfluß durch die Ableitung 10 und
Q4 der Durchfluß durch die Trennsäule 26 ist.

Ein Dosierventil 12 bekannter Bauart weist sechs Anschlüsse a1 bis a6 auf.

In einer ersten Schaltstellung A (voll gezeichnete Verbindungen) wird der Probenstrom aus der Probengasquelle 13 über die Leitung 14 zum Anschluß a1 und von dort über das zwischen den Anschlüssen a3 und a6 liegende Dosiervolumen 16, hier in Farm einer Dosierschleife, zu der mit dem Anschluß a2 verbundenen Ableitung 15 geführt.

Eine an die Trägergaszuleitung 2 angeschlossene Zweigleitung 17 führt Trägergas über den Anschluß a5 zu dem Anschluß a4 in die Probenzuleitung 11 zur Kammer 7.

Ist das Umschaltventil 3 in der Schaltstellung II auf den Leitungszweig 4 geschaltet, fließt Trägergas sowohl durch den Strömungsteiler 5 in die Trennsäule 26 als auch über die Leitung 17, das Dosierventil 12 und die Probenzuleitung 11 in die Kammer 7 und von dort zusammen mit dem aus der Öffnung 8 strömenden Trägergasanteil über die Leitung 10 ab.

Nach Umschalten des Dosierventils 12 in seine zweite Schaltstellung B (gestrichelte Verbindungen) wird der Inhalt des Probenvolumens 16 mit Hilfe des über den Anschluß a5 zugeführten Trägergasstroms über die Zuleitung 11 in die Kammer 7 geführt. Da Q11 < Q10 ist, fließt die Differenz Q10 - Q11 aus der mit vollem Trägergasdruck beaufschlagten Rohrleitung 6 durch die Öffnung 8 in die Kammer 7 aus und geht mit der Probe über die Ableitung 10 ins Freie. Dabei ist darauf zu achten, daß die Diffusionsgeschwindigkeit der Probe kleiner ist als die Austrittsgeschwindigkeit des Trägergases aus der Öffnung 8, um sicherzustellen, daß keine Probe über die Leitung 4′ in die Trennsäule 26 gelangt.

Wird das Umschaltventil 3 in die Schaltstellung I und damit auf den Leitungszweig 9 geschaltet, tritt infolge der geänderten Druckverhältnisse ein Teil des durch die Kammer 7 fließenden Probenvolumens durch die Öffnung 8 in den zur Trennsäule 26 führenden Leitungsabschnitt 4′, während der überschüssige Teil der Probe, das sind bei Kapillarsäulen etwa 90 % des Inhalts des Probenvolumens 16, mit dem Trägergas aus dem Leitungszweig 9 über die Ableitung 10 abgeführt wird.

Die Zeitspanne Δt1, während der das Dosierventil 12 in der zweiten Schaltstellung B ist, wird länger gewählt als die Zeitspanne Δt2, während der das Umschaltventil 3 in Schaltstellung I ist. Die Schaltungen des Umschaltventils 3 und des Dosierventils 12 werden so vorgenommen, daß die Zeitspanne Δt2 innerhalb der Zeitspanne Δt1 liegt. Mit dieser Betriebsweise wird vorteilhaft erreicht, daß die durch Adsorptions- und Diffusionsvorgänge in dem Dosierventil 12 und dem Dosiervolumen 16 mögliche Vermischung und Verschleppung der Gasprobe verursachten Störungen bei der Analyse vermieden werden und durch die Ausschnittsdosierung mit scharfen Dosiergrenzen eine optimale Peak-Form in dem Analysenergebnis erreicht wird.

In der Praxis hat sich herausgestellt, daß die Messung und Einstellung der Gasdurchflüsse Q4, Q10, Q11, die gemäß der Beziehung (1) wesentlich für die Funktion der Dosiereinrichtung sind, relativ schwierig und langwierig ist.

Eine andere Ausbildung der Erfindung, wie sie in den Ansprüchen 3 und 4 gekennzeichnet ist, löst daher die Aufgabe, eine Dosiereinrichtung mit Strömungsteiler und Dosierventil zu schaffen, die ohne die Messung und Einstellung von Volumendurchflüssen betrieben werden kann. Eine Ausführungsform ist in der Figur 2 schematisch dargestellt und im folgenden beschrieben. Teile, die mit den entsprechenden Teilen in Figur 1 übereinstimmen, sind mit den gleichen Bezugszeichen versehen.

Der aus der Trägergasquelle 1 konstanten und einstellbaren Drucks kommende Trägergasstrom wird über eine Leitung 2 dem Eingang eines Zweiwege-Umschaltventils 3 mit einem ersten Ausgang a′ und einem zweiten Ausgang a″ zugeführt.

An den zweiten Ausgang a″ ist eine Leitung 4 angeschlossen, welche über die Rohrleitung 6 des Strömungsteilers 5 zu der Trennsäule 26 führt.

Der Strömungsteiler 5 besteht, wie bereits beschrieben, aus einer Rohrleitung 6, die von einer Kammer 7 umgeben und mittig mit einer ringspaltförmigen Öffnung 8 versehen ist. In dem oberen, stromaufwärts gelegenen Endabschnitt der Kammer 7 mündet die Zuleitung 11 für die Probe. Vom unteren, stromabwärts gelegenen Ende der Kammer 7 geht eine Ableitung 10 aus, in welcher ein Nadelventil 20 angeordnet ist.

Ein Dosierventil 12 bekannter Bauart ist mit sechs Anschlüssen al bis a6 versehen.

Die Probengasquelle 13 ist über die Leitung 14 mit dem Anschluß al verbunden, der Anschluß a2 mit einer Ableitung 15. Ein Dosiervolumen 16 in Form einer Dosierschleife ist mit seinen beiden Enden mit den Anschlüssen a3 und a6 verbunden. Die an den Anschluß a4 angeschlossene Probenzuleitung 11 führt in die Kammer 7. Der Anschluß a5 ist über die Leitung 17 mit dem ersten Ausgang a' des Umschaltventils 3 verbunden. Die Betriebsweise der Einrichtung ist folgende:

In einer ersten Schaltphase ist das Umschaltventil 3 in der Schaltstellung I, das Dosierventil 12 in der Schaltstellung A. Der Trägergasstrom aus der Trägergasquelle 1 strömt über die Leitung 4 und die Rohrleitung 6 des Strömungsteilers 5 zum Teil in die Trennsäule 26 und spült diese durch. Der größere Teil des Trägergasstroms tritt durch die ringspaltförmige Öffnung 8 in die Kammer 7 und fließt von dort zusammen mit einem über eine Leitung 22 mit einem Nadelventil 21 und über die Zuleitung 11 geführten Trägergasstram über die Ableitung 10 ab. Zur Probennahme ist der aus der Probengasquelle 13 über die Leitung 14 fließende Probengasstrom über die Anschlüsse al und a6 auf das Dosiervolumen 16 geschaltet und fließt von dort über den Anschluß a2 in die Leitung 15 ab.

In einer zweiten Schaltphase wird während einer Zeitspanne $\Delta t1$ das Dosierventil in die Schaltstellung B geschaltet. Die im Dosiervolumen 16 befindliche Probe wird nun mit Hilfe des über die Leitungen 22 und 17 zugeführten Trägergases in die Kammer 7 gedrückt und tritt dort zusammen mit dem aus der Öffnung 8 tretenden Trägergas durch die Ableitung 10 aus.

In einer dritten Schaltphase wird das Umschaltventil 3 während einer Zeitspanne $\Delta t2$ in die Schaltstellung II und damit auf den Leitungszweig 17 geschaltet. Die in der Kammer 7 befindliche Probe wird durch die Öffnung 8 in die Rohrleitung 6 gedrückt und von dort in die Trennsäule dosiert. Auch hiergilt $\Delta t1 > \Delta t2$, wobei $\Delta t2$ innerhalb $\Delta t1$ liegt.

Um während der verschiedenen Schaltphasen eine Durchspülung der Toträume zu gewährleisten und eine Diffusion des Probengases in die Leitung 4 stromaufwärts zu verhindern, kann eine Bypass-Leitung 23 mit einem Nadelventil 24 vorgesehen werden, welche die Trägergasleitung 2 mit der Leitung 4 verbindet. Mit einem zwischen die Leitungen 4 und 17 geschalteten Differenzdruckmeßgerät 28 kann die mittels Richtungsänderung des Druckgefälles bewirkte Umschaltung der Trägergasströme in den verschiedenen Schaltphasen überwacht werden.

## Patentansprüche

1. Einrichtung zum Dosieren von Proben für die gaschromatographische Analyse mit
   – einer Trägergasquelle (1) konstanten und einstellbaren Drucks,
   – einem Zweiwege-Umschaltventil (3), dessen Eingang über eine Leitung (2) an die Trägergasquelle (1) angeschlossen ist,
   – einem an den ersten Ausgang (a') des Umschaltventils (3) angeschlossenen Leitungszweig (4),
   – einem Strömungsteiler (5), bestehend aus einer an den Leitungszweig (4) angeschlossenen Rohrleitung (6) mit einer Öffnung (8) und einer die Rohrleitung umgebende, sich stromauf- und stromabwärts der Öffnung (8) erstreckenden Kammer (7),
   – einem an den Ausgang der Rohrleitung (6) angeschlossenen, zu der Trennsäule (26) führenden Leitungsabschnitt (4'),
   – einem an den zweiten Ausgang (a'') des Umschaltventils (3) angeschlossenen Leitungszweig (9), der in dem stromabwärts gelegenen Teil der Kammer (7) mündet,
   – einer von dem stromabwärts gelegenen Teil der Kammer (7) ausgehenden Ableitung (10) mit einem einstellbaren Strömungswiderstand (20),
   – einer an dem oberen, stromaufwärts gelegenen Endabschnitt der Kammer (7) mündenden Zuleitung (11) für die Probe mit einem einstellbaren Strömungswiderstand (25),
   – wobei die Strömungswiderstände in den Leitungen (2, 4, 10 und 11) so bemessen sind, daß der volumetrische Durchfluß (Q11) in der Zuleitung (11) kleiner ist als der Durchfluß (Q10) durch die Ableitung (10), aber größer als der Durchfluß (Q4) in die Trennsäule (26),
   – einem Dosierventil (12) mit sechs Anschlüssen (al bis a6),
   – einer von einer Probengasquelle (13) zu dem Anschluß (al) des Dosierventils (12) führenden Leitung (14),

– einer von dem Anschluß (a2) abgehenden Ableitung (15),
– einem mit seinen Enden an die Anschlüsse (a3 und a6) angeschlossenen Dosiervolumen (16),
– einer von der Trägergasquelle (1) zu dem Anschlüß (a5) führenden Leitung (17),
– der an den Anschluß (a4) angeschlossenen Probenzuleitung (11).

2. Verfahren zum betrieb einer Einrichtung nach Anspruch 1, **dadurch gekennzeichnet**, daß in einer ersten Schaltphase das Umschaltventil (3) in die Schaltstellung (II) auf die Leitung (4) und das Dosierventil (12) in die Schaltstellung (A) geschaltet wird, wobei der Probenstrom über den Anschluß (a1) und das zwischen den Anschlüssen (a3 und a6) angeordnete Dosiervolumen (16) zu dem Anschluß (a2) und von dort über die Leitung (15) fließt und ein von der Trägergasquelle (1) abgezweigter Trägergasstrom über den Anschluß (a5) zum Anschluß (a4) und von dort in die Zuleitung (11) fließt,
und in einer zweiten Schaltphase das Dosierventil (12) in die Schaltstellung (B) geschaltet wird, so daß der Probengasstrom über die Leitung (14) und die Anschlüsse (a1 und a2) in die Ableitung (15) fließt, während der Inhalt des Dosiervolumens (16) mittels des über den Anschluß (a5) zugeführten Trägergasstroms und über die an den Anschluß (a4) angeschlossene Probenzuleitung (11) in die Kammer (7) geführt wird, wobei diese Schaltphase während eines Zeitraums (Δt1) aufrechterhalten wird, und daß
in einer dritten Schaltphase während einer Zeitspanne (Δt2) der zweite Ausgang (a″) des Umschaltventils (3) in die Schaltstellung (I) an den Leitungszweig (9) geschaltet wird, wobei die Zeitspanne (Δt2) kleiner ist als die Zeitspanne (Δt1) und Beginn und Ende der zweiten Zeitspanne (Δt2) innerhalb der ersten Zeitspanne (Δt1) liegen.

3. Einrichtung zum Dosieren von Proben für die gaschromatographische Analyse mit
– einer Trägergasquelle (1) konstanten und einstellbaren Drucks,
– einem Zweiwege-Umschaltventil (3), dessen Eingang über eine Leitung (2) an die Trägergasquelle (1) angeschlossen ist,
– einer an den zweiten Ausgang (a″) des Umschaltventils (3) angeschlossenen Leitung (4),
– einem Stromteiler (5), bestehend aus einer an die Leitung (4) angeschlossenen Rohrleitung (6) mit
– einer mittig angeordneten Öffnung (8) und einer die Rohrleitung (6) umgebenden, sich stromauf- und stromabwärts der Öffnung (8) erstreckenden Kammer (7),
– einer in deren oberen, stromaufwärts gelegenen Endabschnitt mündenden Zuleitung (11) für die Probe,
– einer von deren unteren, stromabwärts gelegenen Endabschnitt ausgehenden Ableitung (10),
– einer vom Ausgang der Rohrleitung (6) des Stromteilers (5) zu der Trennsäule (26) führenden Leitung (4′),
– einem Dosierventil (12) mit sechs Anschlüssen (al bis a6),
– einem daran angeschlossenen Dosiervolumen (16),
– einer Probengasquelle (13), die über die Leitung (14) an den Anschluß (al) des Dosierventils (12) angeschlossen ist,
– einer an den Anschluß (a2) des Dosierventils angeschlossenen Ableitung (15),
– einer mit dem ersten Ausgang (a′) des Umschaltventils (3) verbundenen und zu dem Anschluß (a5) des Dosierventils (12) führenden Leitung (17),
– einer mit einem Nadelventil (21) versehenen Bypass-Leitung (22) zwischen dem Eingang und dem ersten Ausgang (a) des Umschaltventils (3).

4. Einrichtung nach Anspruch 3, **gekennzeichnet durch** eine weitere Bypass-Leitung (23) mit Nadelventil (24) zwischen dem Eingang und dem zweiten Ausgang (a″) des Umschaltventils (3).

5. Verfahren zum Betrieb einer Einrichtung nach Anspruch 3, **dadurch gekennzeichnet**, daß in einer ersten Schaltphase das Umschaltventil (3) in die Schaltstellung (I) geschaltet wird, so daß Trägergas vorgegebenen Drucks über die Leitung (4), den Stromteiler (5) und die Leitung (4′) in die Trennsäule (26) fließt und Probengas über das in Schaltstellung (A) befindliche Dosierventil (12) und das Dosiervolumen (16) strömt, und daß
in einer zweiten Schaltphase das Dosierventil (12) während einer Zeitspanne (Δt1) in die Schaltstellung (B) geschaltet wird und das über die Leitungen (2, 22 und 17) zugeführte Trägergas den Inhalt des Dosiervolumens (16) in die Kammer (7) des Stromteilers (5) drückt, und daß
in einer dritten Schaltphase das Umschaltventil (3) während einer Zeitspanne (Δt2) in die Schaltstellung (II) geschaltet wird und dabei durch Änderung der Druckverhältnisse in der Kammer (7) und in der Rohrleitung (6) des Stromteilers (5) ein Teil der in der Kammer (7) befindlichen Probe durch die Öffnung (8) in

EP 0 386 033 B1

die Leitung (4') und von dort zur Trennsäule (26) geführt wird,
wobei die Zeitspanne (Δt1) der zweiten Schaltphase größer ist als die Zeitspanne (Δt2) der dritten Schaltphase und Anfang und Ende von (Δt2) innerhalb der Zeitspanne (Δt1) liegen.

**Claims**

1. Device for dosing samples for gas-chromatographic analysis, having
   – a carrier-gas source (1) of constant and adjustable pressure,
   – a two-way changeover valve (3), the input of which is connected to the carrier-gas source (1) by way of a line (2),
   – a line branch (4) connected to the first output (a') of the changeover valve (3),
   – a flow divider (5), comprising a pipeline (6) connected to the line branch (4) with an opening (8) and a chamber (7) surrounding the pipeline and extending upstream and downstream of the opening (8),
   – a line section (4') connected to the output of the pipeline (6) and leading to the separating column (26),
   – a line branch (9) connected to the second output (a") of the changeover valve (3) and opening in the part of the chamber (7) which lies downstream,
   – an outgoing line (10) issuing from the part of the chamber (7) lying downstream, with a variable flow resistor (20),
   – a supply line (11) for the sample, opening at the upper end section of the chamber (7) which lies upstream, with a variable flow resistor (25),
   – whereby the flow resistances in the lines (2, 4, 10 and 11) are measured in such a way that the volumetric flow (Q11) in the supply line (11) is smaller than the flow (Q10) through the outgoing line (10), but larger than the flow (Q4) into the separating column (26),
   – a dosing valve (12) with six connections (a1 to a6),
   – a line (14) leading from a sample-gas source (13) to the connection (a1) of the dosing valve (12),
   – an outgoing line (15) leaving the connection (a2),
   – a dosing volume (16) connected at its ends to the connections (a3 and a6),
   – a line (17) leading from the carrier-gas source (1) to the connection (a5),
   – the sample supply line (11) connected to the connection (a4).

2. Method for the operation of a device according to claim 1, characterized in that in a first switching phase the changeover valve (3) is switched into the switching position (II) on to the line (4) and the dosing valve (12) is switched into the switching position (A), whereby the sample flow flows by way of the connection (a1) and the dosing volume (16) arranged between the connections (a3 and a6) to the connection (a2) and from there by way of the line (15), and a carrier-gas flow branched off from the carrier-gas source (1) flows by way of the connection (a5) to the connection (a4) and from there into the supply line (11), and in a second switching phase the dosing valve (12) is switched into the switching position (B), so that the sample-gas flow flows by way of the line (14) and the connections (a1 and a2) into the outgoing line (15), while the contents of the dosing volume (16) are conducted into the chamber (7) by means of the carrier-gas flow supplied by way of the connection (a5) and by way of the sample supply line (11) connected to the connection (a4), whereby this switching phase is maintained during a period (Δt1), and in that in a third switching phase during a time interval (Δt2) the second output (a") of the changeover valve (3) is switched into the switching position (I) at the line branch (9), whereby the time interval (Δt2) is smaller than the time interval (Δt1) and the beginning and end of the second time interval (Δt2) lie within the first time interval (Δt1).

3. Device for dosing samples for gas-chromatographic analysis, having
   – a carrier-gas source (1) of constant and adjustable pressure,
   – a two-way changeover valve (3), the input of which is connected to the carrier-gas source (1) by way of a line (2),
   – a line (4) connected to the second output (a") of the changeover valve (3),
   – a flow divider (5), comprising a pipeline (6) connected to the line (4), having
   – a centrally arranged opening (8) and a chamber (7) surrounding the pipeline (6) and extending upstream and downstream of the opening (8),
   – a supply line (11) for the sample, opening into its upper end section which lies upstream,
   – an outgoing line (10) issuing from its lower end section which lies downstream,

6

– a line (4′) leading from the output of the pipeline (6) of the flow divider (5) to the separating column (26),

– a dosing valve (12) with six connections (a1 to a6),

– a dosing volume (16) connected thereto,

– a sample-gas source (13) which is connected by way of the line (14) to the connection (a1) of the dosing valve (12),

– an outgoing line (15) connected to the connection (a2) of the dosing valve,

– a line (17) connected to the first output (a′) of the changeover valve (3) and leading to the connection (a5) of the dosing valve (12),

– a bypass line (22) provided with a needle valve (21) between the input and the first output (a′) of the changeover valve (3).

4. Device according to claim 3, characterized by a further bypass line (23) with needle valve (24) between the input and the second output (a″) of the changeover valve (3).

5. Method for the operation of a device according to claim 3, characterized in that in a first switching phase the changeover valve (3) is switched into the switching position (I), so that carrier gas of specified pressure flows by way of the line (4), the flow divider (5) and the line (4′) into the separating column (26) and sample gas flows by way of the dosing valve (12) located in switching position (A) and the dosing volume (16), and in that

in a second switching phase the dosing valve (12) during a time interval ($\Delta$t1) is switched into the switching position (B) and the carrier gas supplied by way of the lines (2, 22 and 17) forces the contents of the dosing volume (16) into the chamber (7) of the flow divider (5), and in that

in a third switching phase the changeover valve (3) during a time interval ($\Delta$t2) is switched into the switching position (II) and in this respect by changing the pressure ratios in the chamber (7) and in the pipeline (6) of the flow divider (5) a part of the sample located in the chamber (7) is conducted through the opening (8) into the line (4′) and from there to the separating column (26),

whereby the time interval ($\Delta$t1) of the second switching phase is greater than the time interval ($\Delta$t2) of the third switching phase and the start and end of ($\Delta$t2) lie within the time interval ($\Delta$t1).

**Revendications**

1. Dispositif d'injection d'échantillons pour l'analyse par chromatographie en phase gazeuse, comprenant

– une source (1) de gaz porteur sous pression constante et réglable,

– une vanne d'inversion (3) à deux voies, dont l'entrée est raccordée à la source (1) de gaz porteur par un conduit (2),

– un branchement (4) raccordé à la première sortie (a′) de la vanne d'inversion (3),

– un diviseur de flux (5), constitué d'un conduit (6) qui est raccordé au branchement (4) et qui comporte une ouverture (8) et d'une chambre (7) entourant le conduit et s'étendant en amont et en aval de l'ouverture (8),

– un tronçon de conduit (4′), qui est raccordé à la sortie du conduit (6) et qui mène à la colonne de séparation (26),

– un branchement (9), qui est raccordé à la seconde sortie (a″) de la vanne d'inversion (3) et qui débouche dans la partie de la chambre (7), qui est située en aval,

– un conduit d'évacuation (10) issu de la partie en aval de la chambre (7) et ayant une résistance à l'écoulement (20) réglable,

– un conduit d'admission (11) de l'échantillon, qui débouche à la section d'extrémité de la chambre supérieure (7) et se trouvant en amont et qui comporte une résistance à l'écoulement réglable (25),

– les résistances à l'écoulement dans les conduits (2, 4, 10 et 11) étant telles que le débit volumétrique (Q11) dans le conduit d'admission (11) est inférieur au débit (Q10) dans le conduit d'évacuation (10), mais supérieur au débit (Q4) dans la colonne de séparation (26),

– une vanne d'injection (12) ayant six raccords (a1 à a6),

– un conduit (14) menant de la source (13) de l'échantillon de gaz au raccord (a1) de la vanne d'injection (12),

– un conduit d'évacuation (15) issu du raccord (a2),

– un volume d'injection (16) raccordé par ses extrémités aux raccords (a3 et a6),

– un conduit (17) menant de la source (1) de gaz porteur au raccord (a5),

EP 0 386 033 B1

– le conduit d'admission (11) de l'échantillon raccordé au raccord (a4).

2. Procédé pour la mise en oeuvre d'un dispositif suivant la revendication 1, caractérisé en ce qu'il consiste à mettre, dans une première phase, la vanne d'inversion (3) en la position de branchement (II) sur le conduit (4) et la vanne d'injection (12) en la position de branchement (A), le courant d'échantillon s'écoulant par le raccord (a1) et par le volume d'injection (16) disposé entre les raccords (a3 et a6) vers le raccord (a2) et, de là, par le conduit (15), et un courant de gaz porteur dérivé de la source (1) de gaz porteur s'écoulant par le raccord (a5) vers le raccord (a4) et, de là, dans le conduit d'admission (11),

et, dans une seconde phase, à mettre la vanne d'injection (12) en la position de branchement (B), de manière que le courant de l'échantillon de gaz s'écoule par le conduit (14) et par les raccords (a1 et a2) dans le conduit d'évacuation (15), tandis que le contenu du volume d'injection (16) est envoyé au moyen du courant de gaz porteur admis par le raccord (15) et par le conduit d'admission (11) de l'échantillon raccordé au raccord (a4), à la chambre (7), cette phase étant maintenue pendant un laps de temps ($\Delta t1$),

et à mettre dans une troisième phase, pendant un laps de temps ($\Delta t2$), la seconde sortie (a″) de la vanne d'inversion (3) en la position de communication avec le branchement (9), le laps de temps ($\Delta t2$) étant inférieur au laps de temps ($\Delta t1$) et le début et la fin du second laps de temps ($\Delta t2$) se trouvant dans le premier laps de temps ($\Delta t1$).

3. Dispositif d'injection d'échantillons pour l'analyse par chromatographie en phase gazeuse, comprenant
– une source (1) de gaz porteur sous pression constante et réglable,
– une vanne d'inversion (3) à deux voies, dont l'entrée est raccordée par un conduit (2) à la source (1) de gaz porteur,
– un conduit (4) raccordé à la seconde sortie (a″) de la vanne d'inversion (3),
– un diviseur de flux (5), constitué d'un conduit (6) raccordé au conduit (4) et ayant
– une ouverture (8), disposée dans la partie centrale, et une chambre (7) entourant le conduit (6) et s'étendant en amont et en aval de l'ouverture (8),
– un conduit d'admission (11) de l'échantillon, débouchant dans son tronçon d'extrémité supérieur se trouvant en amont,
– un conduit d'évacuation (10), issu de son tronçon d'extrémité inférieur se trouvant en aval,
– un conduit (4′), menant de la sortie du conduit (6) du diviseur de flux (5) à la colonne de séparation (26),
– une vanne d'injection (12) ayant six raccords (a1 à a6),
– un volume d'injection (16) qui y est raccordé,
– une source (13) qu gaz-échantillon, qui est raccordée par le conduit (14) au raccord (a1) de la vanne d'injection (12),
– un conduit d'évacuation (15) raccordé au raccord (a2) de la vanne d'injection,
– un conduit (17) communiquant avec la première sortie (a′) de la vanne d'inversion (3) et menant au raccord (a5) de la vanne d'injection (12),
– un conduit de dérivation (22), muni d'une vanne à pointeau (21) et interposé entre l'entrée et la première sortie (a′) de la vanne d'inversion (3).

4. Dispositif suivant la revendication 3, caractérisé par un autre conduit de dérivation (23) à vanne à pointeau (24) interposé entre l'entrée et la seconde sortie (a″) de la vanne d'inversion (3).

5. Procédé pour faire fonctionner un dispositif suivant la revendication 3, caractérisé en ce qu'il consiste à mettre, dans une première phase, la vanne d'inversion (3) en la position de branchement (I), de manière que du gaz porteur de pression prescrite s'écoule par le conduit (4), par le diviseur de flux (5) et par le conduit (4′), dans la colonne de séparation (26), et que du gaz-échantillon passe par la vanne d'injection (12) se trouvant en la position de branchement (A) et par le volume d'injection (16) et, dans une seconde phase, à mettre la vanne d'injection (12), pendant un laps de temps ($\Delta t1$), en la position de branchement (B) et à refouler, par le gaz porteur envoyé par les conduits (2, 22 et 17), le contenu du volume d'injection (16) dans la chambre (7) du diviseur de flux (5), et

dans une troisième phase, à mettre la vanne d'inversion (3) dans la position de branchement (II) pendant un laps de temps ($\Delta t2$) et à envoyer ainsi, en modifiant les rapports de pression dans la chambre (7) et dans le conduit (6) qu diviseur de flux (5), en le faisant passer par l'ouverture (8), une partie de l'échantillon se trouvant dans la chambre (7) au conduit (4′) et, de là, à la colonne de séparation (26),

le laps de temps ($\Delta t1$) de la deuxième phase étant plus grand que le laps de temps ($\Delta t2$) de la troisième phase et le début et la fin de ($\Delta t2$) se trouvant dans le laps de temps ($\Delta t1$).

8

FIG 1

FIG 2